# EUROPÄISCHE PATENTSCHRIFT

(11) **EP 2 020 366 B1**
(45) Veröffentlichungstag und Bekanntmachung des Hinweises auf die Patenterteilung: **07.04.2010**
(21) Anmeldenummer: 08012205.4
(22) Anmeldetag: 07.07.2008
(51) Int. Cl.: B62D 35/00

(54) **Dachspoileranordnung für Nutzfahrzeug-Fahrerhäuser**
Roof spoiler array for commercial vehicle driver cabs
Agencement de spoiler de toit pour cabine du chauffeur d'un véhicule utilitaire

(30) Priorität: 02.08.2007 DE 102007036335
(43) Veröffentlichungstag der Anmeldung: 04.02.2009
(73) Patentinhaber: MAN Nutzfahrzeuge Aktiengesellschaft, 80976 München (DE)
(72) Erfinder: Mederle, Günther, Dipl.-Ing., 85051 Ingolstadt (DE); Baumgartner, Jürgen, Dipl.-Ing., 85051 Ingolstadt (DE)

(56) Entgegenhaltungen:
- EP-A- 1 055 589
- DE-A1- 19 825 252
- GB-A- 2 393 694
- US-A- 4 082 340

## Beschreibung

Die Erfindung betrifft eine Dachspoileranordnung für Nutzfahrzeug-Fahrerhäuser nach dem Oberbegriff des Anspruchs 1.

Es ist allgemein bekannt, Nutzfahrzeuge, insbesondere Lkw's für den Fernverkehr, mit einem Dachspoiler auszustatten, um die Aerodynamik des Fahrzeugs zu verbessern. Um weiter den Höhenunterschied des Fahrerhauses bzw. der Fahrerkabine zu anschließenden, festen oder beweglichen, höheren oder breiteren Aufbauten bzw. Auflegern ausgleichen zu können, ist es erforderlich, dass der Dachspoiler selbst als in der Höhe einstellbar ausgelegt ist.

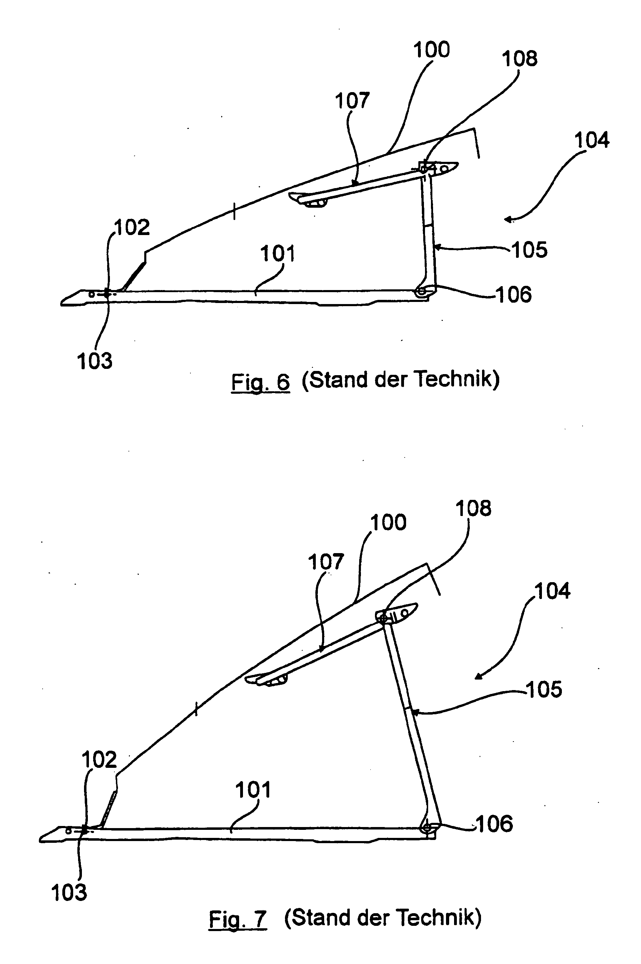

Beispielsweise ist es aus dem durch die Figuren 6 und 7 repräsentierten Stand der Technik allgemein bekannt, eine Dachspoileranordnung für Nutzfahrzeug-Fahrerhäuser vorzusehen, bei der ein Dachspoiler 100 mittels einer auf dem Dach 101 eines Fahrerhauses vorgesehenen Schwenklageranordnung 102 um eine Spoilerachse 103 als Drehachse schwenkbar ist. Weiter ist eine beabstandet von der Schwenklageranordnung in Fahrzeuglängsrichtung dahinter angeordnete Verstelleinrichtung 104 vorgesehen, mittels der der Dachspoiler 100, wie dies den Figuren 6 und 7 zu entnehmen ist, in unterschiedliche Schwenkposition überführbar und dort haltbar ist. Konkret besteht die Verstelleinrichtung hier aus einer Strebengelenkanordnung mit einer ersten dachseitig angelenkten Strebe 105, die über ein Gelenklager 106 gelenkig am Dach angelenkt ist, sowie aus einer zweiten Strebe 107, die über ein Gelenklager 108 gelenkig mit der ersten Strebe 105 verbunden ist. Diese beiden Gelenklager 106, 108 sind in Verbindung mit der Schwenklageranordnung 102 erforderlich, um die Schwenkbewegung des Dachspoilers 100 zwischen den unterschiedlichen Schwenkpositionen einfach und bequem zu ermöglichen. Für eine stabile Anordnung sind hier jeweils (nicht dargestellt) in Fahrzeugquerrichtung gesehen zwei Strebengelenkanordnungen beabstandet voneinander zwischen dem hinteren freien Dachspoilerende und dem Dach 101 vorgesehen. Diese beiden Strebengelenkanordnungen sind zusätzlich in Fahrzeugquerrichtung noch mit einer weiteren Strebe verbunden, die in der Art einer "Spurstange" für die Synchronisierung der Schwenkverstellbewegung auf den gegenüberliegenden Seiten sorgt. Wie dies der Figur 6 und 7 in der Zusammenschau weiter entnommen werden kann, ist zudem die erste Strebe 105 als Teleskopstrebe ausgebildet, über die der Verstellweg vorgegeben wird. Ein derartiger Aufbau weist eine gewisse Funktionssicherheit auf, ist jedoch bauteiltechnisch relativ aufwändig.

Aus der DE 198 25 252 A1, die eine Dachspoileranordnung gemäß dem Oberbegriff des Anspruchs 1 offenbart, ist bereits eine Dachspoileranordnung für Nutzfahrzeug-Fahrerhäuser bekannt, bei der ein Windleitkörper bezeichneter Dachspoiler mittels zweier vorderer Lager an einem Dach eines Fahrerhauses befestigt ist. Zur Höhenverstellung des Dachspoilers ist an diesem eine Trageinrichtung angeordnet, die durch ein Querrohr gebildet ist, an dem wiederum mittig ein Tragarm befestigt ist. Der Tragarm erstreckt sich im montierten Zustand nach unten und ist mit einer Stütze verbindbar, die fest auf dem Fahrzeugdach angeordnet ist. Diese Stütze ist in Fahrtrichtung gesehen hinter dem Tragarm angeordnet und bildet somit das Außenteil der Trageinrichtung. Konkret ist zur Höheneinstellung am Tragarm eine Konsole vorgesehen, auf der ein Gleitschuh befestigt ist. In diesem Gleitschuh befindet sich eine Gewindeausnehmung. Diese Gewindeausnehmung nimmt eine Schraube mit einer Unterlegscheibe auf einer Klammer auf, so dass die Stütze zwischen der Klammer und dem Gleitschuh angeordnet werden kann. Die Gleitschuhfläche ist auf eine gewölbte Fläche der Stütze aufbringbar, wobei die gewölbte Fläche Teil einer Zylinderfläche um die Drehachse der Gelenkeinrichtung ist. Die Klammer befindet sich auf einer konvexen Fläche der Stütze, die zur gewölbten Fläche parallel verläuft und mittig einen Schlitz aufweist. An den Endabschnitten weist die Klammer Zähne auf, die mit vertikalen Zahnabschnitten in Eingriff stehen. Wenn sich die Aufbauten des Fahrzeugs ändern und die Höhe des Windleitkörpers bzw. Dachspoilers verändert werden muss, wird zu diesem Zweck die Schraube gelöst, der Gleitschuh an der gewölbten Fläche, die Klammer an der konvexen Fläche und schließlich die Schraube im Schlitz verschoben, um dann auf der gewünschten Höhe die Eingriffsabschnitte (Zähne) durch ein Anziehen der Schraube mit den dann entsprechend zugeordneten Zahnabschnitten der Stütze in Eingriff zu bringen.

Ein derartiger Aufbau ist insgesamt gesehen relativ bauteilaufwändig und weist zudem die Gefahr auf, dass sich die Schraube während des rauen Fahrbetriebs gegebenenfalls lockern kann und dadurch die sichere, gewünschte Höhenfixierung des Dachspoilers nicht mehr funktionssicher in Position halten kann. Zudem besteht hier die Gefahr, dass bei einem Verlust der Schraube auch die Klammer verloren geht und dadurch ohne ein entsprechendes Ersetzen dieser Klammer kein funktionierender Dachspoiler mehr zur Verfügung steht. Insgesamt handelt es sich daher bei einem derartigen Aufbau um eine wenig praktikable Lösung.

Weiter zeigt die GB 2 393 694 A einen Aufbau, bei dem ein Dachspoiler mit einem Schenkel ein spoilerseitiges Vertikalelement von außen her umgreift. Die Fixierung erfolgt hier über zugeordnete und fluchtende Schraublöcher, durch die eine Befestigungsschraube hindurch geschraubt wird. Durch eine Stecknasenanordnung ist eine Beweglichkeit in Fahrzeuglängsrichtung gegeben, die für einen entsprechenden Toleranzausgleich beim Auf- und Abschwenken des Dachspoilers sorgt, um ein Verklemmen zu verhindern.

Demgegenüber ist es Aufgabe der vorliegenden Erfindung, eine Dachspoileranordnung für Nutzfahrzeug-Fahrerhäuser zur Verfügung zu stellen, mittels der eine Höhenverstellung eines Dachspoilers auf einfache und funktionssichere Weise mit geringem Bauteilaufwand möglich ist.

Diese Aufgabe wird gelöst mit den Merkmalen des Patentanspruchs 1. Vorteilhafte Ausgestaltungen hierzu sind Gegenstand der darauf rückbezogenen Unteransprüche.

Gemäß Anspruch 1 umgreift das spoilerseitige Schiebeführungsteil das dachseitige Schiebeführungsteil in Fahrzeuglängsrichtung in Richtung von der Spoilerachse weg gesehen von außen her, wobei das spoilerseitige und das dachseitige Schiebeführungsteil an ihren einander zugewandten Anlageseiten Haltemittel aufweisen, mittels denen die Schiebeführungsteile in ihrer eingestellten Position haltbar sind, wobei die Haltemittel durch eine überdrückbare Verbindung mit einander entlang des Verschiebeweges zuordenbaren Rastelementen und Rastgegenelementen gebildet sind.

Mit einer derartigen erfindungsgemäßen Ausgestaltung ergibt sich eine besonders stabile, funktionssichere und zuverlässige Abstützung des Dachspoilers sowie Anlageverbindung der beiden Schiebeführungsteile aneinander, da mit einem derartigen Aufbau eine gewisse "Spannung" im Bereich der Schiebeführung aufgebaut werden kann, die die zuverlässige und funktionssichere Halterung sowie Abstützung der beiden Schiebeführungsteile aneinander und damit des Dachspoilers in einer einmal eingestellten Schwenkposition sicherstellt. Zudem ist eine derartige Anordnung bei einer entsprechenden Kraftaufbringung sehr gut überdrückbar, so dass eine einfache und funktionssichere Höhenverstellung der beiden Schiebeführungsteile zueinander möglich ist.

Des Weiteren kann ein derartiger Aufbau besonders einfach und preiswert mit wenig Bauteilen hergestellt und realisiert werden und besteht überdies keine Gefahr, dass sich im rauen Fahrbetrieb gegebenenfalls Bauteile lösen und damit zum Verlust dieser Bauteile führen können, was wiederum zu einer Beschädigung bzw. einem Funktionsverlust der Höhenverstelleinrichtung und damit der Dachspoileranordnung insgesamt führt.

Mit einer derartigen erfindungsgemäßen Lösung wird weiter ein besonders funktionssicheres und bauteiltechnisch einfach beherrschbares Verschwenken des Dachspoilers, bevorzugt um eine durch eine Schwenklageranordnung gebildete Spoilerachse als Schwenkachse möglich. Der Einsatz einer Vielzahl von bauteilintensiven Gelenklagern zur Realisierung der Schwenkverstellung des Dachspoilers kann somit vorteilhaft entfallen, so dass gemäß der bevorzugten Ausgestaltung lediglich noch eine einzige Schwenklageranordnung zur Ausbildung der Spoilerachse vorgesehen zu werden braucht, nicht jedoch für die Höhenverstellung des Dachspoilers.

Ein besonderer Vorteil einer derartigen Schiebeführung ist darin zu sehen, dass durch die abstützende Anlageverbindung der beiden Schiebeführungsteile auf einfache Weise eine sehr funktionssichere, wenig störanfällige, stabil ausbildbare und einfach zu bedienende Verstelleinrichtung zur Verfügung gestellt werden kann. Die abstützende Anlageverbindung einer derartigen Schiebeführung bewirkt nämlich eine geführte Relativverschiebung der beiden Schiebeführungsteile zueinander, die die zuverlässige und funktionssichere Verschwenkung des Dachspoilers sicherstellt. Insbesondere in Verbindung mit einer gemäß einer bevorzugten Ausführungsform-Anordnung von zwei derartigen Schiebeführungen an in Fahrzeugquerrichtung gesehen in etwa gegenüberliegenden Dachspoilereckrandbereichen lässt sich somit eine zuverlässige, genau synchronisierte Höhenverschwenkung des Dachspoilers ohne zusätzliche Verbindungsstrebe zwischen den beiden Schiebeführungslagern erzielen, wie diese bei der Strebengelenkanordnung gemäß dem zuvor gewürdigten Stand der Technik erforderlich ist. Das heißt, dass mit der erfindungsgemäßen Lösung besonders vorteilhaft die Bauteilvielfalt als solche reduziert werden kann, so dass die erfindungsgemäße Verstelleinrichtung in Form einer Schiebeführung auch einfacher zu montieren und damit insgesamt preiswerter in der Herstellung ist.

Wie eben ausgeführt, stellt die Verwendung von mehreren in Fahrzeugquerrichtung beabstandeten sowie bevorzugt in Fahrzeuglängsrichtung jeweils einen gleichen Abstand von der Spoilerachse aufweisenden Schiebeführungen eine bevorzugte Ausgestaltung dar, da hierdurch eine funktionssichere Abstützung des Dachspoilers in der vorgegebenen Verschwenkposition möglich ist. Grundsätzlich könnte jedoch auch, z. B. in Verbindung mit einer in Fahrzeugquerrichtung gesehen breiteren Ausgestaltung und Dimensionierung der Schiebeführung auch eine solche Lösung möglich sein, bei der lediglich eine einzige Schiebeführung vorgesehen ist, z. B. in einem bezogen auf die Fahrzeugquerrichtung mittleren Bereich des Dachspoilers.

Insgesamt wird daher mit der erfindungsgemäßen Dachspoileranordnung ein Traggestellsystem für einen Dachspoiler zur Verfügung gestellt, das auf baulich einfache Weise mit hoher Funktionssicherheit ein Verschwenken des Dachspoilers in unterschiedliche Schwenkpositionen ermöglicht.

Für eine flächige Anlageverbindung liegen das spoilerseitige und das dachseitige Schiebeführungsteil mit ihren jeweiligen Anlageseiten jeweils flächig aneinander an. Damit wird eine stabile Abstützung der Schiebeführungsteile sowohl in deren Ruhestellung als auch während des Verschwenkens zur Verfügung gestellt.

Beispielsweise ist die Raststruktur so ausgebildet, dass in Form von Rastnasen ausgebildete Rastelemente im verrasteten Zustand formschlüssig in die in Form von Rastnuten ausgebildeten Rastgegenelemente eingreifen. Eine derartige Raststruktur ist einfach, z. B. durch Verprägungen oder dergleichen herstellbar. Zudem ist eine derartige Raststruktur insbesondere bei einer mehr wellenförmigen Ausgestaltung bei einer entsprechenden Kraftaufbringung sehr gut überdrückbar. Außerdem ist über derartige Raststrukturen eine sehr gute und zuverlässige Kontrolle möglich, ob im Falle von mehreren Schiebeführungen diese jeweils eine gleiche Höhenverstellung der beiden Schiebeführungsteile zueinander aufweisen. Dies kann gegebenenfalls noch durch zusätzliche Markierungen oder entsprechende Formgebung einzelner Raststrukturbereiche optisch unterstützt werden. Abgesehen von den eben genannten Vorteilen ist mit einer derartigen Raststruktur selbstverständlich auch eine besonders zuverlässige und sichere Halterung der Schiebeführungsteile in ihrer eingestellten Position möglich, wobei hier gegebenenfalls noch zusätzliche Befestigungselemente vorgesehen sein können, z. B. zusätzliche Befestigungsschrauben oder Sicherungssplinte oder dergleichen.

Bevorzugt sind das spoilerseitige Schiebeführungsteil und das dachseitige Schiebeführungsteil jeweils L-förmig ausgebildet dergestalt, dass jeweils ein erster L-Schenkel fest mit dem Dachspoiler bzw. dem Dach verbunden ist, während die jeweils zweiten L-Schenkel in der abstützenden Anlageverbindung relativ zueinander verlagerbar aneinander anliegen. Ein derartiger Aufbau ist bauteiltechnisch relativ einfach herstellbar und ermöglicht insbesondere auch eine einfache Montage im Rahmen einer Serienfertigung. Zudem können derartige Schiebeführungsteile grundsätzlich auch aus einem preiswerten Kunststoffmaterial hergestellt sein.

Für eine besonders vorteilhafte Abstützung ist gemäß einer weiteren bevorzugten Ausgestaltung der Erfindung vorgesehen, dass das dachseitige Schiebeführungsteil am in Fahrzeuglängsrichtung gesehen hinteren Dachrandbereich eines Daches angeordnet ist. Dieses Dach kann jede Art von Dach sein, also ein Normaldach, ein Flachdach oder ein Hochdach eines Führerhauses sein.

Die Schwenklageranordnung selbst, die bevorzugt durch zwei voneinander in Fahrzeugquerrichtung beabstandete Scharniere gebildet ist, kann zudem zusätzlich noch Lagerböcke aufweisen, über die eine vorteilhafte und funktionssichere Befestigung der Scharniere am Dach des Fahrerhauses erfolgen kann.

Die Erfindung wird nachfolgend anhand einer Zeichnung näher erläutert.

Es zeigen:
- Fig. 1: schematisch eine perspektivische Draufsicht auf eine erfindungsgemäße Dach- spoileranordnung,
- Fig. 2: schematisch eine Prinzipskizze einer erfindungsgemäßen Dachspoileranordnung in einer Grundposition,
- Fig. 3: schematisch eine Prinzipskizze der Dachspoileranordnung gemäß Fig. 2 in einer höhenverschwenkten Position des Dachspoilers,
- Fig. 4: eine äußerst schematische, vergrößerte Detailansicht einer Einzelheit der Anla- geverbindung zwischen spoilerseitigem Schiebeführungsteil und dachseitigem Schiebeführungsteil,
- Fig. 5: eine schematisch vergrößerte Detailansicht der Einzelheit A der Fig. 4,
- Fig. 6: eine Dachspoileranordnung gemäß dem Stand der Technik in einer Grundpositi- on, und
- Fig. 7: eine Dachspoileranordnung gemäß dem Stand der Technik in einer höhenver- schwenkten Position.

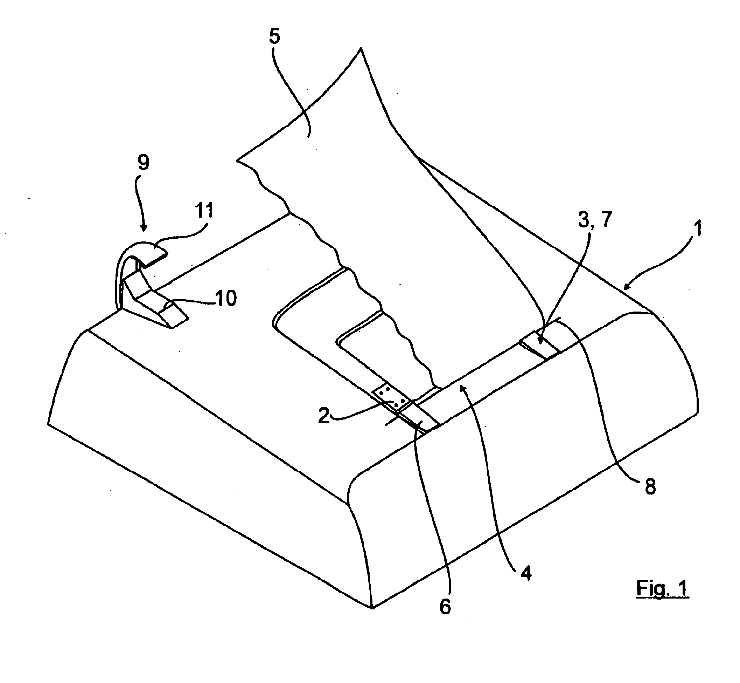

Die Fig. 1 zeigt schematisch und perspektivisch eine Draufsicht auf ein Hochdach 1, das Bestandteil eines hier nicht dargestellten Fahrerhauses bzw. einer Fahrerkabine ist. Dieses Dach 1 weist in einem mittleren Bereich eine durch zwei in Fahrzeugquerrichtung y beabstandete Scharniere 2, 3 gebildete Schwenklageranordnung 4 auf, über die ein Dachspoiler 5 schwenkbar am Hochdach 1 angelenkt ist.

Die beiden Scharniere 2, 3 der Schwenklageranordnung 4 sind über Lagerböcke 6, 7, die hier nur äußerst schematisch dargestellt sind, am Hochdach 1 befestigt und bilden eine Spoilerachse 8 als Schwenkachse für den Dachspoiler 5 aus.

In Fahrzeuglängsachsenrichtung x gesehen beabstandet hinter der Schwenklageranordnung 4 ist zu beiden Seiten des Dachspoilers 5 jeweils eine Schiebeführung 9 vorgesehen, von der in der Darstellung der Fig. 1 lediglich die linke Schiebeführung 9 gezeigt ist.

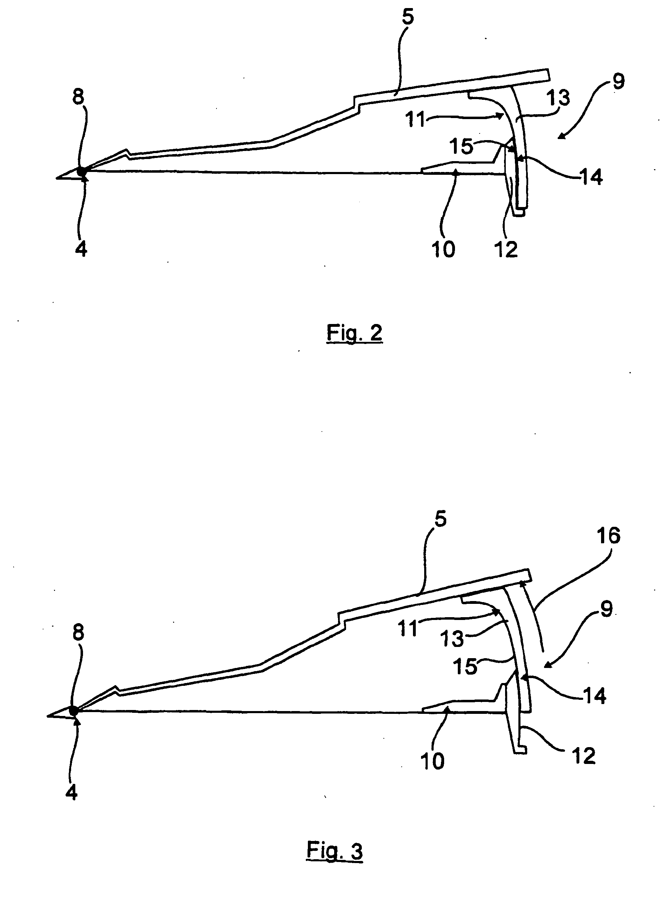

Wie dies insbesondere auch aus den Prinzipskizzen der Fig. 2 und 3 hervorgeht, besteht diese Schiebeführung 9 jeweils aus einem dachseitigen Schiebeführungsteil 10 und einem spoilerseitigen Schiebeführungsteil 11. Das dachseitige Schiebeführungsteil 10 weist ebenso wie das spoilerseitige Schiebeführungsteil 11 eine L-Form auf. Sowohl das dachseitige Schiebeführungsteil 10 als auch das spoilerseitige Schiebeführungsteil 11 sind über z. B. Schraubverbindungen mit dem Dach 1 bzw. dem Dachspoiler 5 fest verbunden, und zwar dergestalt, dass die beiden freien L-Schenkel 12, 13 mit ihren einander zugewandten Anlageflächen in einer Anlageverbindung flächig aneinander anliegen, wie dies insbesondere den Fig. 2 und 3 zu entnehmen ist. Dabei umgreift das spoilerseitige Schiebeführungsteil 11 das dachseitige Schiebeführungsteil 10 von hinten und damit von außen her.

Die die Anlagenflächen 14, 15 ausbildenden Anlageflächen weisen eine Kreisbogengeometrie entsprechend einem Kreisbogen um die Spoilerachse 8 als Kreismittelpunkt auf, so dass bei einer in der Fig. 3 schematisch dargestellten Schwenkverstellung des Dachspoilers 5 in Richtung des Pfeils 16 das spoilerseitige Schiebeführungsteil relativ zum ortsfesten dachseitigen Schiebeführungsteil 10 dergestalt verlagert wird, dass der Dachspoiler 5 um einem vorgegeben Verschwenkwinkel nach oben verschwenkt wird.

Bei dieser Relativverschiebung gleitet das spoilerseitige Schiebeführungsteil 11 mit seinem L-Schenkel 13 mittels seiner Anlagefläche 15 um den vorgegebenen Verschiebeweg entlang der Anlagefläche 14 des L-Schenkels 12 des dachseitigen Schiebeführungsteils 10 geführt und abgestützt nach oben, wobei durch die Kreisbogengeometrie, wie sie zuvor beschrieben worden ist, sichergestellt ist, dass ein funktionssicheres Aufeinander-Abgleiten der beiden Anlageflächen 14, 15 ohne Verklemmungen oder Spreizungen erfolgen kann.

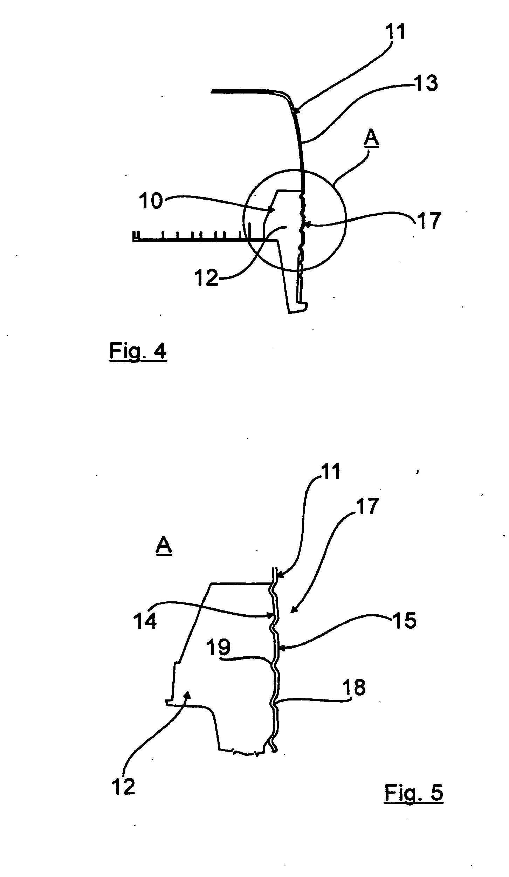

Wie dies weiter in den Fig. 4 und 5 gezeigt ist, weisen die beiden Anlageflächen 14, 15 eine Raststruktur 17 auf, die hier durch Rastnasen 18 und Rastnuten 19 gebildet ist, wobei die Rastnasen 18 so ausgebildet sind, dass diese formschlüssig und überdrückbar in die Rastnuten 19 eingreifen.

Mit einer derartigen Raststruktur wird eine zuverlässige und sichere Positionierung des Dachspoilers 5 in einer gewünschten Verschwenkposition möglich, insbesondere ein Halten des Dachspoilers 5 in einer gewünschten Schwenkposition. Gegebenenfalls kann eine einmal eingenommene Rastposition auch noch mit hier nicht dargestellten zusätzlichen Fixiermitteln, z. B. einer Splintsicherung oder dergleichen, zusätzlich fixiert werden.

Des weiteren können z. B. in Verbindung mit den Rastnasen 18 und/oder Rastnuten 19 zusätzliche Markierungen vorgesehen sein, die bei mehreren in Fahrzeugquerrichtung y voneinander beabstandeten Schiebeführungen 9 eine einfache Zuordnung der jeweiligen Rastnasen 18 und Rastnuten 19 auf einer gleichen Höhe ermöglichen. Dies ist hier ebenfalls nicht mit dargestellt, beispielsweise können derartige Markierungen jedoch durch z. B. Ziffern oder dergleichen angegeben werden.

## Patentansprüche

1. Dachspoileranordnung für Nutzfahrzeug-Fahrerhäuser,
mit einem Dachspoiler (5), mit einer auf dem Dach (1) eines Fahrerhauses vorsehbaren Schwenklageranordnung (4), mittels der der Dachspoiler um eine Spoilerachse (8) schwenkbar montierbar ist, sowie mit einer Verstelleinrichtung, mittels der der Dachspoiler (5) in unterschiedliche Schwenkpositionen überführbar und dort haltbar ist, wobei die Verstelleinrichtung als Schiebeführung (9) mit einem spoilerseitigen und einem dachseitigen Schiebeführungsteil (10, 11) ausgebildet ist, die bei einem Verschwenken des Dachspoilers (5) in einer abstützenden Anlageverbindung aneinander anliegen und entlang eines vorgegebenen Verschiebeweges relativ zueinander verlagerbar sind, wobei das spoilerseitige und das dachseitige Schiebeführungsteil (10, 11) im Bereich ihrer die Anlageverbindung ausbildenden und einander zugewandten Anlageseiten (14, 15) jeweils eine Kreisbogengeometrie entsprechend einem Kreisbogen um die Spoilerachse (8) als Kreismittelpunkt aufweisen, und wobei das spoilerseitige Schiebeführungsteil (11) fest mit dem Dachspoiler (5) verbunden ist, während das dachseitigen Schiebeführungsteil (10) fest mit dem Dach (1) des Fahrerhauses verbindbar ist,
**dadurch gekennzeichnet,**
**dass** das spoilerseitige Schiebeführungsteil (11) das dachseitige Schiebeführungsteil (10) in Fahrzeuglängsrichtung in Richtung von der Spoilerachse (8) weg gesehen von außen her umgreift, und
**dass** das spoilerseitige und das dachseitige Schiebeführungsteil (10, 11) an ihren einander zugewandten Anlageseiten (14, 15) Haltemittel (17) aufweisen, mittels denen die Schiebeführungsteile (10, 11) in ihrer eingestellten Position haltbar sind, wobei die Haltemittel durch eine überdrückbare Verbindung (17) mit einander entlang des Verschiebeweges zuordenbaren Rastelementen (18) und Rastgegenelementen (19) gebildet sind.

2. Dachspoileranordnung nach Anspruch 1, **dadurch gekennzeichnet, dass** das spoilerseitige und das dachseitige Schiebeführungsteil (10,11) jeweils Anlageflächen (14, 15) für eine flächige Anlageverbindung aneinander aufweisen.

3. Dachspoileranordnung nach Anspruch 1 oder 2, **dadurch gekennzeichnet, dass** die Raststruktur (17) so ausgebildet ist, dass die in Form von Rastnasen (18) ausgebildeten Rastelemente im verrasteten Zustand formschlüssig in die in Form von Rastnuten (19) ausgebildeten Rastgegenelemente eingreifen.

4. Dachspoileranordnung nach einem der Ansprüche 1 bis 3, **dadurch gekennzeichnet, dass** mehrere, insbesondere zwei in Fahrzeugquerrichtung mit einem vorgegebenen Abstand voneinander beabstandete und in Fahrzeuglängsrichtung jeweils einen gleichen Abstand von der Spoilerachse (8) aufweisende Schiebeführungen (9) vorgesehen sind.

5. Dachspoileranordnung nach einem der Ansprüche 1 bis 4, **dadurch gekennzeichnet, dass** die Raststruktur (17) so ausgebildet und/oder mit zusätzlichen Markierungen versehen ist, dass bei mehreren Schiebeführungen (9) eine Zuordnung der Rastelemente (18) und der Rastgegenelemente (19) bei den unterschiedlichen Schiebeführungen (9) in gleicher Höhe visuell und/oder haptisch unterstützt durchführbar ist.

6. Dachspoileranordnung nach Anspruch 4 oder Anspruch 5, **dadurch gekennzeichnet, dass** zwei in Fahrzeugquerrichtung voneinander beabstandete Schiebeführungen (9) vorgesehen sind, die zudem so in Fahrzeuglängsrichtung von der Spoilerachse (8) beabstandet sind, dass diese im bezogen auf die Fahrzeuglängsrichtung hinteren Eckrandbereich des Dachspoilers (5) angeordnet sind.

7. Dachspoileranordnung nach einem der Ansprüche 1 bis 6, **dadurch gekennzeichnet, dass** das spoilerseitige Schiebeführungsteil (11) und das dachseitige Schiebeführungsteil (10) jeweils eine L-Form aufweisen dergestalt, dass jeweils ein erster L-Schenkel fest mit dem Dachspoiler (5)oder dem Dach (1) verbunden ist, während die jeweils zweiten L-Schenkel (12, 13) in der abstützenden Anlageverbindung relativ zueinander verlagerbar aneinander anliegen.

8. Dachspoileranordnung nach einem der Ansprüche 1 bis 7, **dadurch gekennzeichnet, dass** das dachseitige Schiebeführungsteil (10) am in Fahrzeuglängsrichtung gesehen hinteren Dachrandbereich eines Daches (1) angeordnet werden kann.

9. Dachspoileranordnung nach einem der Ansprüche 1 bis 8, **dadurch gekennzeichnet, dass** die Schwenklageranordnung (4) durch mehrere, insbesondere zwei in Fahrzeugquerrichtung voneinander beabstandete Scharniere (2, 3) gebildet ist, an denen in Fahrzeuglängsrichtung gesehen der Dachspoiler (5) mit einem vorderen Dachspoilerrandbereich schwenkbar angelenkt ist und die die Spoilerachse (8) ausbilden.

10. Dachspoileranordnung nach Anspruch 9, **dadurch gekennzeichnet, dass** die Scharniere über Lagerböcke (6, 7) am Dach (1) des Fahrerhauses befestigt sind.

## Claims

1. Roof spoiler array for commercial vehicle driver cabs,
with a roof spoiler (5), with a pivot bearing array (4) that can be provided on the roof (1) of a driver cab, by means of which pivot bearing array the roof spoiler can be mounted pivotable about a spoiler axis (8), as well as an adjusting fixture, by means of which adjusting fixture the roof spoiler (5) can be moved and held in various pivot positions, whereby the adjusting fixture is designed as a sliding guide (9) with a sliding guide part (10, 11) on the spoiler side and on the roof side, which sliding parts lie against one another in a supporting contact connection when the roof spoiler (5) is pivoted and can be displaced relative to one another along a predetermined displacement path, whereby each sliding guide part (10, 11) on the spoiler side and on the roof side features a circular arc geometry corresponding to a circular arc about the spoiler axis (8) as the centre of a circle in the area of their contact sides (14, 15) forming the contact connection and facing one another, and whereby the sliding guide part (11) on the spoiler side is firmly attached to the roof spoiler (5), whilst the sliding guide part (10) on the roof side can be firmly attached to the roof (1) of the driver cab,
**characterised in that**
the sliding guide part (11) on the spoiler side encloses the sliding guide part (10) on the roof side from the outside in the longitudinal direction of the vehicle when viewed away from the spoiler axis (8), and
the sliding guide part (10, 11) on the spoiler side and on the roof side feature holding means (17) on their contact sides (14, 15) that face one another, by means of which holding means the sliding guide parts (10, 11) can be held in their set position, whereby the holding means are formed by a pressable connection (17) with detent elements (18) and detent counter elements (19) that can be assigned to each other along the displacement path.

2. Roof spoiler array in accordance with claim 1, **characterised in that** the sliding guide part (10, 11) on the spoiler side and on the roof side each feature contact surfaces (14, 15) for a flush contact connection with each another.

3. Roof spoiler array in accordance with claim 1 or 2, **characterised in that** the detent structure (17) is designed such that the detent elements designed in the form of detent lugs (18) engage positively when in their detented state in the detent counter elements designed in the form of detent grooves (19).

4. Roof spoiler array in accordance with one of claims 1 to 3, **characterised in that** several, in particular two, sliding guides (9) are provided that are distanced from one another in the transverse direction of the vehicle by a predetermined distance and that are distanced by an identical distance respectively from the spoiler axis (8) in the longitudinal direction of the vehicle.

5. Roof spoiler array in accordance with one of claims 1 to 4, **characterised in that** the detent structure (17) is designed and/or features additional markings such that in the case of several sliding guides (9), a visual and/or haptically supported assignment of the detent elements (18) and the detent counter elements (19) to the various sliding guides (9) at the same height can be carried out.

6. Roof spoiler array in accordance with claim 4 or claim 5, **characterised in that** two sliding guides (9) are provided that are distanced from one another in the transverse direction of the vehicle, which sliding guides are further distanced from the spoiler axis (8) in the longitudinal direction of the vehicle such that these sliding guides are positioned in the rear corner edge area of the roof spoiler (5) relative to the longitudinal direction of the vehicle.

7. Roof spoiler array in accordance with one of claims 1 to 6, **characterised in that** the sliding guide part (11) on the spoiler side and the sliding guide part (10) on the roof side each feature an L-shape, such that a first L-shank is firmly attached to the roof spoiler (5) or the roof (1) in each case, whilst the respective second L-shanks (12, 13) lie against one another and can be displaced relative to each other in the supporting contact connection.

8. Roof spoiler array in accordance with one of claims 1 to 7, **characterised in that** the sliding guide part (10) on the roof side can be positioned in the rear roof edge area of a roof (1) relative to the longitudinal direction of the vehicle.

9. Roof spoiler array in accordance with one of claims 1 to 8, **characterised in that** the pivot bearing array (4) is formed by several, in particular two, hinges (2, 3) distanced from one another in the transverse direction of the vehicle, to which hinges the roof spoiler (5) is hinged pivotable with a front roof spoiler edge area seen in the longitudinal direction of the vehicle and which hinges form the spoiler axis (8).

10. Roof spoiler array in accordance with claim 9, **characterised in that** the hinges are fixed to the roof (1) of the driver cab by means of mounting brackets (6, 7).

## Revendications

1. Disposition du déflecteur de pavillon pour cabines de véhicule industriel,
avec un déflecteur de pavillon (5), avec une disposition de paliers de pivotement (4) prévoyable sur le pavillon (1) d'une cabine, au moyen de laquelle le déflecteur de pavillon peut être monté de manière pivotable autour d'un axe de déflecteur (8), ainsi qu'avec un dispositif de réglage au moyen duquel il est possible de déplacer le déflecteur de pavillon (5) dans différentes positions de pivotement et de le maintenir dans ces positions, auquel cas le dispositif de réglage est conçu comme guidage coulissant (9) avec une pièce de guidage coulissant côté déflecteur et une pièce de guidage coulissant côté pavillon (10, 11) qui sont appliquées l'une contre l'autre, formant ainsi une liaison par appui servant d'appui lors d'un pivotement du déflecteur de pavillon (5) et sont déplaçables l'une par rapport à l'autre le long d'un chemin de déplacement spécifié, auquel cas la pièce de guidage coulissant côté déflecteur et celle côté pavillon (10, 11) présentent, dans la zone de leur côté d'appui respectif (14, 15) formant la liaison par appui et orientés l'un vers l'autre, à chaque fois une géométrie en forme d'arc de cercle correspondant à un arc de cercle autour de l'axe de déflecteur (8) comme centre du cercle, et auquel cas la pièce de guidage coulissant côté déflecteur (11) est reliée de manière fixe au déflecteur de pavillon (5), tandis que la pièce de guidage coulissant côté pavillon (10) peut être reliée de manière fixe au pavillon (1) de la cabine,
**caractérisée en ce que**
la pièce de guidage coulissant côté déflecteur (11) enveloppe, vu de l'extérieur, la pièce de guidage coulissant côté pavillon (10) dans le sens longitudinal du véhicule, en s'éloignant de l'axe de déflecteur (8), et
la pièce de guidage coulissant côté déflecteur et celle côté pavillon (10, 11) présentent des moyens de fixation (17) au niveau de leur côté d'appui respectif (14, 15), orientés l'un vers l'autre, permettant de maintenir les pièces de guidage coulissant (10, 11) dans leur position réglée, les moyens de fixation étant formés d'une liaison enfonçable (17) avec des éléments d'encrantement (18) et des contre-éléments d'encrantement (19) affectables les uns aux autres le long du chemin de déplacement.

2. Disposition du déflecteur de pavillon selon la revendication 1, **caractérisée en ce que** la pièce de guidage coulissant côté déflecteur et celle côté pavillon (10, 11) présentent chacune des surfaces d'appui (14, 15) pour une liaison par appui plane l'une sur l'autre.

3. Disposition du déflecteur de pavillon selon la revendication 1 ou 2, **caractérisée en ce que** la structure d'encrantement (17) est conçue de telle manière que les éléments d'encrantement conçus en forme d'ergots d'encrantement (18) sont en prise en état encranté, par liaison mécanique, avec les contre-éléments d'encrantement conçus en forme d'encoches d'encrantement (19).

4. Disposition du déflecteur de pavillon selon l'une des revendications 1 à 3, **caractérisée en ce que** plusieurs guidages coulissants (9), en particulier deux, disposés à une distance spécifiée l'un par rapport à l'autre dans le sens transversal du véhicule et présentant chacun un écart identique par rapport à l'axe de déflecteur (8) dans le sens longitudinal du véhicule, sont prévus.

5. Disposition du déflecteur de pavillon selon l'une des revendications 1 à 4, **caractérisée en ce que** la structure d'encrantement (17) est conçue et/ou est pourvue de repères supplémentaires de telle manière qu'en cas de plusieurs guidages coulissants (9), il soit possible de réaliser une affectation des éléments d'encrantement (18) et des contre-éléments d'encrantement (19) des différents guidages coulissants (9) à hauteur égale de manière visuelle et/ou par contact haptique.

6. Disposition du déflecteur de pavillon selon la revendication 4 ou 5, **caractérisée en ce que** deux guidages coulissants (9) disposés à une certaine distance l'un par rapport à l'autre dans le sens transversal du véhicule sont prévus et sont disposés en outre à une certaine distance de l'axe de déflecteur (8) dans le sens longitudinal du véhicule de sorte que ceux-ci soient disposés dans la zone de bordure des coins arrière du déflecteur de pavillon (5) en référence au sens longitudinal du véhicule.

7. Disposition du déflecteur de pavillon selon l'une des revendications 1 à 6, **caractérisée en ce que** la pièce de guidage coulissant côté déflecteur (11) et la pièce de guidage coulissant côté pavillon (10) présentent chacune une forme en L de sorte qu'un premier montant en L est relié à chaque fois de manière fixe au déflecteur de pavillon (5) ou au pavillon (1), tandis que les deuxièmes montants en L (12, 13) sont à chaque fois en appui de manière déplaçable relativement les uns par rapport aux autres dans la liaison par appui servant d'appui.

8. Disposition du déflecteur de pavillon selon l'une des revendications 1 à 7, **caractérisée en ce que** la pièce de guidage coulissant côté pavillon (10) peut être disposée au niveau de la zone de bordure arrière d'un pavillon (1), vu dans le sens longitudinal du véhicule.

9. Disposition du déflecteur de pavillon selon l'une des revendications 1 à 8, **caractérisée en ce que** la disposition de paliers de pivotement (4) est formée de plusieurs charnières (2, 3), en particulier de deux, disposées à une certaine distance les unes par rapport aux autres dans le sens transversal du véhicule, charnières sur lesquelles, vu dans le sens longitudinal du véhicule, le déflecteur de pavillon (5) est articulé de manière pivotable dans une zone de bordure avant du déflecteur de pavillon, et qui forment l'axe de déflecteur (8).

10. Disposition du déflecteur de pavillon selon la revendication 9, **caractérisée en ce que** les charnières sont fixées sur le pavillon (1) de la cabine par le biais de supports de fixation (6, 7).
